# EUROPÄISCHE PATENTSCHRIFT

(11) **EP 2 172 141 B1**
(45) Veröffentlichungstag und Bekanntmachung des Hinweises auf die Patenterteilung: **21.08.2013**
(21) Anmeldenummer: 09012310.0
(22) Anmeldetag: 29.09.2009
(51) Int. Cl.: A47J 45/07

(54) **Kochgeschirr mit abnehmbarem Griff- oder Stielelement**
Cooking cutlery with removable grip or handle element
Vaisselle de cuisson dotée d'un élément de poignée ou de tige amovible

(30) Priorität: 04.10.2008 DE 102008050477
(43) Veröffentlichungstag der Anmeldung: 07.04.2010
(73) Patentinhaber: GSW Gäns Stahlwaren GmbH, 55595 Spabrücken (DE)
(72) Erfinder: Gäns, Peter, 55595 Spabrücken (DE)
(74) Vertreter: Graf Glück Kritzenberger

(56) Entgegenhaltungen:
- EP-A1- 0 714 624
- CN-A- 101 103 884
- CN-Y- 2 748 011
- US-A- 2 494 159
- US-A- 3 422 485

## Beschreibung

Die Erfindung betrifft ein Kochgeschirr mit abnehmbarem Griff- oder Stielelement gemäß dem Oberbegriff des Patentanspruches 1.

Kochgeschirre, insbesondere in Form von Pfannen oder Töpfen sind hinlänglich bekannt. Diese weisen häufig einen beispielsweise aus Kunststoff oder einem anderen nicht wärmeleitenden Material hergestelltes Griff- oder Stielelement auf, welches üblicherweise fest an einem Geschirrkörper fixiert ist.

Nachteilig sind derartige Kochgeschirre mit fest montierten Griff- oder Stielelement nur schwer in Küchenschränken oder ähnlichen Aufbewahrungsbehältnissen verstaubar und nehmen, besonders bei Stiel- oder Griffelementen großer Länge bzw. Breite einen erheblichen Stauraum ein. Analog hierzu ist die maschinelle.Reinigung derartiger Kochgeschirre aufgrund der abstehenden Griff- oder Stielelemente äußerst beschwerlich.

Um diese Nachteile zu beseitigen, sind bereits aus dem Stand der Technik (DE 20 2007 000 677 U1) Kochgeschirre mit abnehmbaren Griff- oder Stielelementen bekannt. Hierbei kann beispielsweise ein abnehmbares Griff- oder Stielelement für unterschiedliche Kochgeschirre vorgesehen sein. Bekannte Lösungen weisen hierzu vorzugsweise aus zumindest einem Steckelement und einer zugehörigen Aufnahmeeinheit bestehende Kupplungsanordnungen auf. Diese sind jedoch häufig umständlich bedienbar, und zwar ist hierbei eine Betätigung eines Bedienknopfes sowohl zum Verschließen als auch zum Lösen der Kupplungsanordnung zur Befestigung des abnehmbares Griff- oder Stielelement am Geschirrkörper erforderlich.

Aus der CN 2 748 011 Y ist ein Kochgeschirr mit Kupplungsanordnung zur Befestigung eines Stielelementes am Geschirrkörper bekannt, wobei zwei Verriegelungselemente in eine stirnseitige Nut eingreifen und über Anschlagflächen und Gegenanschlagflächen fixiert werden. Zur Entriegelung sind gleichzeitig zwei Betätigungselemente zu bedienen, welche seitlich am Griff- bzw. Kupplungselement angeordnet sind. Die beiden Betätigungselemente liegen hierbei unmittelbar an den Verriegelungselementen an.

Auch die CN 101 103 884 A offenbart eine Kupplungsanordnung zur Befestigung eines Stielelementes am Geschirrkörper, bei der ebenfalls zwei Verriegelungselemente vorgesehen sind.

Die US 3 422 485 A betrifft einen abnehmbaren Griff für ein Kochgeschirr, bei dem im Griff sowohl eine feste als auch eine drehbar gelagerte Klemmbacke angeordnet sind. Ein Ende der drehbar gelagerten Klemmbacke rastet im Verriegelungszustand hinter einer Lippe eines Ansatzes des Geschirrkörpers ein. Dadurch wird eine zwischen Gehäusewand und Klemmbacke angeordnete Feder gespannt. Ein Antriebshebel mit einem Steg sichert durch Eingreifen des Steges in einen Nocken die Verriegelungssteilung der drehbar, gelagerten Klemmbacke. Durch Betätigung eines Druckknopfes rastet der Steg aus, wodurch das Ende der drehbar gelagerten Klemmbacke aufgrund der Federspannung aus der Verriegelung gelöst wird.

Schließlich offenbart die EP 0 714 624 A1 eine Griffbefestigung für einen Handgriff an einem Kochgefäß, bei der an dem Kochgeschirr ein vom Kochgefäß seitlich nach außen wegstehendes Haltestück befestigt ist, welches von einem Griffstück mit einer Ausnehmung überfangen wird. In der Ausnehmung des Griffstückes ist ein Federstück befestigt, welches an dem Haltestück beispielsweise an einer Querschulter selbsttätig und formschlüssig einrastet, sobald das Griffstück über das Haltestück geschoben wird. Das Federstück ist direkt mit einem beweglichen Betätigungsstück belastbar und dabei von dem Haltestück entriegelbar.

Einen weiteren abnehmbaren Stiel für Pfannen oder Töpfe offenbart die US 2,494,159, bei dem ein Stielelement über einen Kupplungskopf in einem an der Pfanne oder am Topf angeordneten Ansatzstück befestigt ist. Ein erstes und ein zweites Verriegelungselement am Kupplungskopf sind dabei über ein Hebelgestänge, welches sich in einer Bohrung im Stielelement über die gesamte Länge des Stiels erstreckt, mit einem am freien Stielende angeordneten Betätigungselement verbunden. Durch Druck auf das am freien Stielende angeordnete Betätigungselement in einer der Längsausrichtung des Stiels verlaufenden Richtung werden die damit verbundenen Verriegelungselemente geschwenkt, die Verriegelung wird gelöst und der Stiel kann vom Topf oder von der Pfanne abgenommen werden.

Ausgehend von dargelegten Stand der Technik besteht die Aufgabe der Erfindung darin, ein Kochgeschirr mit zumindest einem abnehmbarem Griff- oder Stielelement vorzuschlagen, welches eine einfache und bedienerfreundliche Befestigung des abnehmbaren Griff- oder Stielelementes am Geschirrkörper ermöglicht. Die Aufgabe wird ausgehend von den Merkmalen des Oberbegriffes des Patentanspruches 1 durch dessen kennzeichnende Merkmale gelöst.

Der wesentliche Aspekt des erfindungsgemäßen Kochgeschirrs ist darin zu sehen, dass das zumindest eine Verriegelungselement der Kupplungsanordnung um eine senkrecht zur Längsachse der Kupplungsanordnung verlaufende Dreh-oder Schwenkachse dreh- bzw. schwenkbar und/oder in einer senkrecht zur Längsachse der Kupplungsanordnung verlaufenden Ebene verschiebbar gelagert ist und dass das Gegenkupplungselement der Kupplungsanordnung zumindest eine stirnseitige Nut oder zumindest eine seitliche Nut mit zumindest einer Anschlagfläche aufweist. Ferner weist das Verriegelungselement zumindest eine Gegenanschlagsfläche auf und das Verriegelungselement greift zur Verriegelung des im Kupplungselement aufgenommenen Gegenkupplungselementes in die zumindest eine stirnseitige Nut oder die zumindest eine seitliche Nut wenigstens teilweise ein, und zwar derart, dass sich die Gegenanschlagfläche im Verriegelungszustand auf der Anschlagsfläche abstützt. Zur Betätigung des ersten und zweiten Verriegelungselementes ist besonders vorteilhaft ein an der Oberseite des Kupplungselementes angeordnetes Betätigungselement vorgesehen, wobei das erste und zweite Verriegelungselement über eine Auslösemechanik mit dem Betätigungselement verbunden sind und wobei die Auslösemechanik durch eine Betätigung des Betätigungselementes in Richtung des Kupplungselementes steuerbar ist. Besonders vorteilhaft wird durch die dreh- oder schwenkbare und/oder verschiebbare Ausbildung des Verriegelungselements sowie das Vorsehen einer stirnseitigen oder zumindest einer seitlichen Nut im Gegenkupplungselement ein einfaches Aufstecken des Kupplungselementes auf das Gegenkupplungselementes - ohne Betätigung eines Betätigungselementes- möglich. Weiterhin vorteilhaft bilden die Gegenanschlagfläche und die Anschlagsfläche ein Widerlager aus, welches das Gegenkupplungselement im Kupplungselement verriegelt.

Weiterhin vorteilhaft weist das Kupplungselement einen Führungskanal zur zumindest teilweisen Aufnahme des Gegenkupplungselementes auf, wobei das Gegenkupplungselementes einen Verbindungszapfen umfasst, dessen Querschnittsform zur Herstellung einer vorzugsweise verdrehungssicheren Verbindung mit dem Kupplungselement ausgebildet ist

Weitere vorteilhafte Ausbildungen der Erfindung sind den abhängigen Ansprüchen zu entnehmen. Die Erfindung wird nachfolgend anhand von Zeichnungen an mehreren Ausführungsbeispielen näher erläutert. Es zeigen:
- Fig. 1: eine schematische Seitenansicht eines Kochgeschirrs mit einem abnehmbaren Griff- oder Stielelement,
- Fig. 2: eine Draufsicht auf einer Ausführungsform der erfindungsgemäßen Kupplungsanordnung zur Befestigung abnehmbaren Griff- oder Stielelement am Geschirrkörper,
- Fig. 3: eine perspektivische Teilexplosionsdarstellung der Kupplungsmechanik der in Figur 2 dargestellten Kupplungsanordnung,
- Fig. 4: eine perspektivische Schnittdarstellung entlang der Längsachse durch die in Figur 3 dargestellte Kupplungsmechanik,
- Fig. 5: eine perspektivische Darstellung einer alternativen Ausführungsform der Kupplungsmechanik und
- Fig. 6: eine perspektivische Darstellung des Kupplungselementes der in Figur 5 dargestellten Kupplungsmechanik.

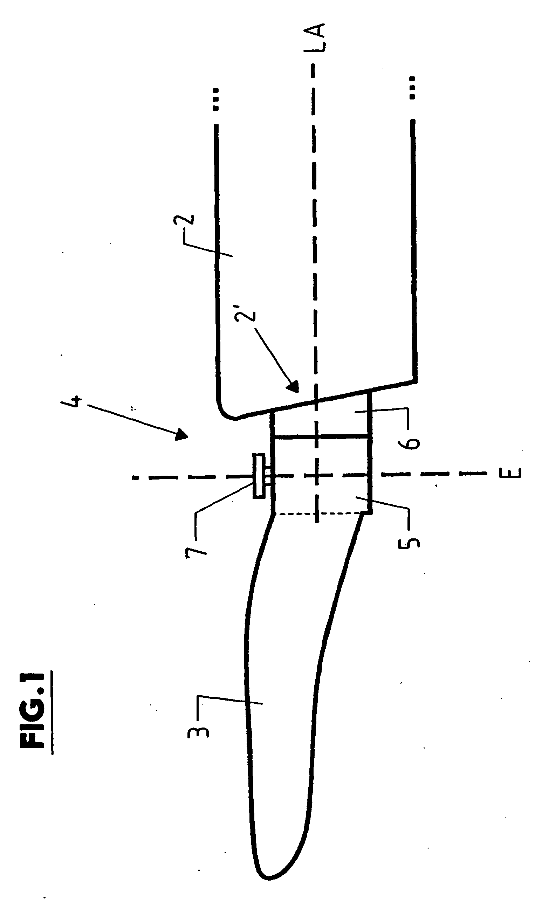

Das in Figur 1 in einer schematischen Seitenansicht beispielhaft dargestellte Kochgeschirr 1 besteht aus einem Geschirrkörper 2 und wenigstens einem abnehmbaren Griff- oder Stielelement 3, dass über eine sich entlang einer Längsachse LA erstreckende Kupplungsanordnung 4 bestehend aus wenigstens einem Kupplungselement 5 und wenigstens einem Gegenkupplungselement 6 am Geschirrkörper 2 lösbar befestigt ist. Hierbei kann das Kochgeschirr 1 beispielsweise eine Pfanne oder ein Topf sein.

Das Kupplungselement 5 und das Gegenkupplungselement 6 schließen hierbei entlang der Längsachse LA der Kupplungsanordnung 4 aneinander an, wobei die Längsachse LA näherungsweise senkrecht zum Anschlussbereich 2' der seitlichen Wandung des Geschirrkörpers 2 verläuft.

Das Kupplungselement 5 ist mit dem abnehmbaren Griff- oder Stielelement 3 und das Gegenkupplungselement 6 mit dem Geschirrkörper 2 oder vice versa verbunden. Alternativ kann das Kupplungselement 5 oder das Gegenkupplungselement 6 im Geschirrkörper 2 bzw. im abnehmbaren Griff- oder Stielelement 3 integriert oder einstückig mit diesem ausgebildet sein. Auch können die genannten Elemente der Kupplungsanordnung 4 modulartig ausgebildet sein, so dass unterschiedliche Griff- oder Stielelemente 3 am Geschirrkörper 2 befestigt werden können. Die Kupplungsmechanik der Kupplungsanordnung 4 ist ferner in zumindest einem zweiteiligen Gehäuse aufgenommen, auf welches im Folgenden jedoch nicht näher eingegangen wird.

Das Kupplungselement 5 weist einen Führungskanal 5.1 zur zumindest teilweisen Aufnahme des Gegenkupplungselementes 6 auf, wobei der Führungskanal 5.1 vorzugsweise konzentrisch zur Längsachse LA der Kupplungsanordnung 4 ausgebildet ist. Vorzugsweise weist der Führungskanal 5.1 einen quadratischen oder rechteckförmigen Querschnitt auf.

Im Führungskanal 5.1 ist zumindest eine Auslösemechanik 5.2 vorgesehen, über welche zumindest ein Verriegelungselement 5.3, 5.3' um zumindest eine Dreh- oder Schwenkachse A, A* dreh- oder schwenkbar und/oder entlang einer Ebene E verschiebbar ist. Hierbei verläuft die Längsachse LA jeweils senkrecht zur Dreh- oder Schwenkachse A, A* bzw. zur Ebene E.

Die Auslösemechanik 5.2 ist über ein Betätigungselement 7 von außen steuerbar, welches vorzugsweise über die Oberseite der Kupplungsanordnung 4 nach oben wegsteht und zum Lösen bzw. Entriegeln der Kupplungsanordnung 4 vorgesehen ist. Nach Lösen bzw. Entriegeln der Kupplungsanordnung 4 kann das Griff- oder Stielelement 3 vom Geschirrkörper 2 problemlos abgenommen werden. In einer bevorzugten Ausführungsform ist das Betätigungselement 7 beispielsweise als Druckknopf realisiert.

Das Gegenkupplungselement 6 weist ferner zumindest einen Verbindungszapfen 6.1 auf, dessen Querschnittsform zur Herstellung einer vorzugsweise verdrehungssicheren Verbindung mit dem Kupplungselement 5 ausgebildet ist. Hierzu wird der Verbindungszapfen 6.1 in den Führungskanal 5.1 des Kupplungselementes 5 eingebracht und mittels des Verriegelungselementes 5.2 darin verriegelt, wobei beispielsweise im Kupplungsfall der Verbindungszapfen 6.1 nahezu vollständig im Führungskanal 5.1 aufgenommen ist.

Zur Verriegelung des eingebrachten Verbindungszapfens 6.1 weist dieser eine senkrecht zur Längsachse LA verlaufende stirnseitige Nut 6.2 oder wenigstens eine ebenfalls senkrecht zur Längsachse LA verlaufende seitliche Nut 6.3, 6.3'auf, in welche jeweils das zumindest eine Verriegelungselement 5.3 des Kupplungselementes 5 eingreift. Hierbei weisen die stirnseitige Nut 6.2 bzw. die zumindest eine seitliche Nut 6.3, 6.3' zumindest eine parallel zur Ebene E und senkrecht zur Längsachse LA verlaufende Anschlagfläche AF, AF* auf, auf der sich zumindest eine Gegenanschlagfläche GAF, GAF* des Verriegelungselementes 5.3 im Verriegelungszustand abstützt, so dass eine Verzahnung des Verriegelungselementes 5.3 in der stirnseitigen Nut 6.2 bzw. der zumindest einen seitlichen Nut 6.3, 6.3' des Verbindungszapfen 6.1 vorliegt.

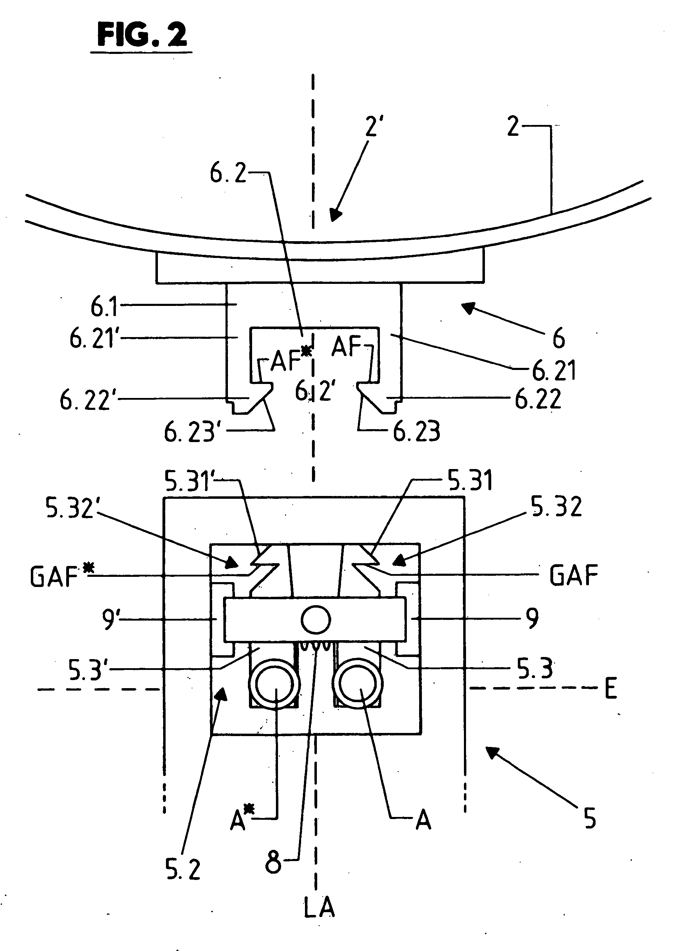

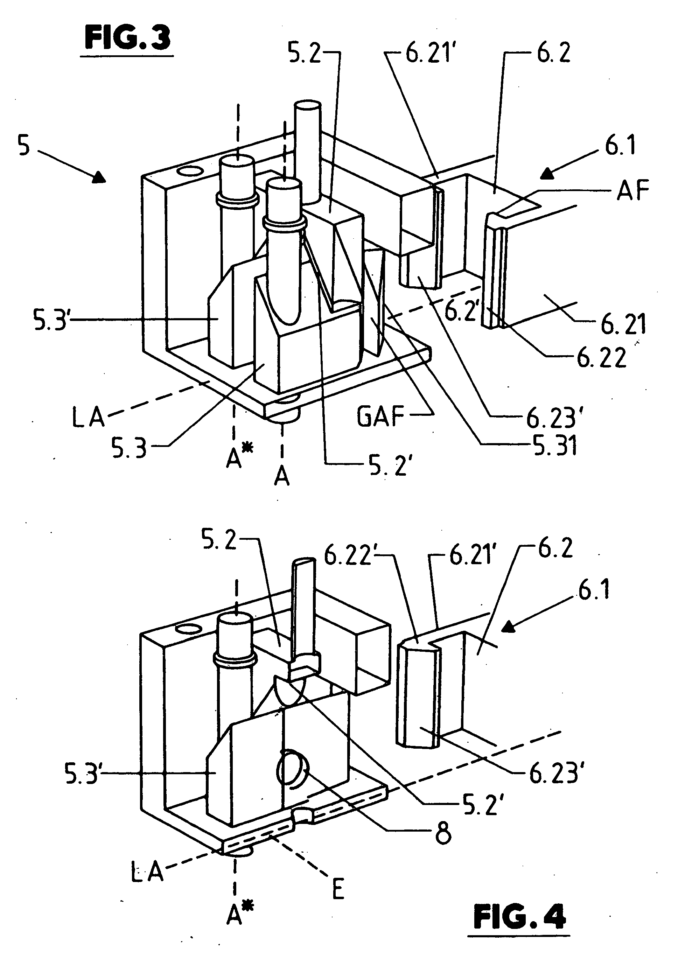

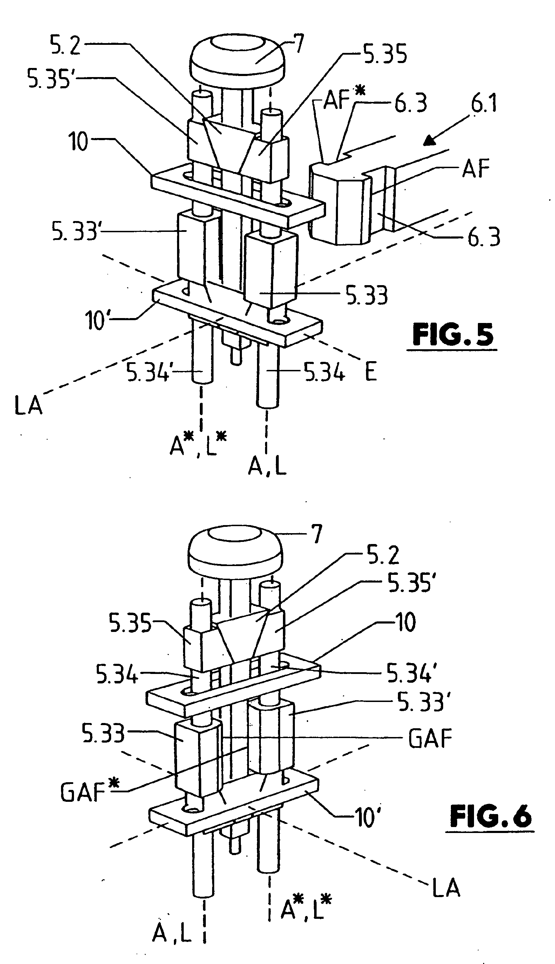

Im Folgenden wird die erfindungsgemäße Kupplungsanordnung 4 anhand von zwei Ausführungsbeispielen näher erläutert, wobei in den Figuren 2 bis 4 eine erste Ausführungsvariante und in den Figuren 5 und 6 eine zweite Ausführungsvariante der erfindungsgemäßen Kupplungsanordnung 4 dargestellt sind.

Gemäß der ersten Ausführungsvariante ist im Verbindungszapfen 6.1 des Gegenkopplungselementes 6 eine vorzugsweise stirnseitige Nut 6.2 vorgesehen, die symmetrisch zur Längsachse LA ist und die beispielsweise im Querschnitt ein in Richtung des Kupplungselementes 5 offenes Rechteck ausbildet, in welches zwei um jeweils eine Dreh- oder Schwenkachse A, A* dreh- oder schwenkbar im Führungskanal 5.1 des Kupplungselementes 5 angeordnete Verriegelungselemente 5.3, 5.3' eingreifen.

Die stirnseitige Nut 6.2 wird durch zwei vorzugsweise parallel zueinander verlaufende Wandabschnitte 6.21, 6.21', die durch jeweils einen nach innen weisenden kurzen Schenkel 6.22, 6.22' abgeschlossen werden, gebildet, wobei die gegenüberliegenden kurzen Schenkel 6.22, 6.22' eine Nutöffnung 6.2' begrenzen. Die Außenflächen der Wandabschnitte 6.21, 6.21' können in einer alternativen Ausführungsform konisch noch innen zulaufen, und zwar in Richtung der Längsachse LA. Der zur Aufnahme des Verbindungszapfens 6.1 vorgesehene Führungskanal 5.1 des Kupplungselementes 5 ist an diese konisch zulaufende Ausbildung der Wandabschnitte 6.21, 6.21' angepaßt.

Die innen liegenden Schenkelflächen der kurzen Schenkel 6.22, 6.22' bilden eine erste und zweite Anschlagfläche AF, AF* aus, die jeweils parallel zur Ebene E und senkrecht zur Längsachse LA verläuft. Vorzugsweise läuft hierbei der der ersten und zweiten Anschlagfläche AF, AF* gegenüberliegende Mantelflächenabschnitt 6.23, 6.23' schräg nach innen zu.

Im Führungskanal 5.1 des Kupplungselementes 5 ist beispielsweise ein erstes Verriegelungselement 5.3 um eine erste Dreh- oder Schwenkachse A und ein zweites Verriegelungselement 5.3' um eine zweite Dreh- oder Schwenkachse A* dreh- bzw. schwenkbar gelagert, wobei die erste und zweite Dreh- oder Schwenkachse A, A' in der senkrecht zur Längsachse LA verlaufenden Ebene E angeordnet sind, und zwar parallel zueinander.

Zwischen dem ersten und zweiten Verriegelungselement 5.3, 5.3' ist zumindest ein Vorspannelement 8, beispielsweise eine Feder, vorgesehen, welche das erste und zweite Verriegelungselement 5.3, 5.3' mit einer von der Längsachse LA jeweils nach außen wirkenden Vorspannkraft beaufschlagt. Das erste und zweite Verriegelungselement 5.3, 5.3' sind über die Auslösemechanik 5.2 mit dem Betätigungselement 7 verbunden und werden von der Auslösemechanik 5.2 in einer Ruheposition gehalten, in welcher das erste und zweite Verriegelungselement 5.3, 5.3' annähernd parallel zueinander verlaufen.

Zur Befestigung des Kupplungselementes 5 am Gegenkupplungselement 6 wird das Kupplungselement 5 auf den Verbindungszapfen 6.1 aufgesteckt und aufgrund der hierdurch erzeugten, entlang der Längsachse LA wirkenden Kraft das erste und zweite Verriegelungselement 5.3, 5.3' über die Ausnehmungsöffnung 6.2' in die stirnseitige Nut 6.2 eingeführt, wobei die gegenüberliegende Mantelflächenabschnitte 6.23, 6.23' der kurzen Schenkel 6.22, 6.22' zwei gegenläufige Gleitflächen ausbilden, die jeweils einen spitzen Winkel mit der Längsachse LA einschließen.

Analog hierzu weisen die freien Enden des ersten und zweiten Verriegelungselementes 5.3, 5.3' jeweils eine an die Gleitflächen der kurzen Schenkel 6.22, 6.22' angepasste, im Querschnitt näherungsweise dreieckförmige Spitze auf, deren nach außen gerichteter stirnseitiger Mantelflächenabschnitt 5.31, 5.31' ebenfalls einen spitzen Winkel mit der Längsachse LA einschließt.

An den nach außen gerichteter stirnseitigen Mantelflächenabschnitten 5.31, 5.31' schließt sich jeweils eine vorzugsweise im Querschnitt dreieckförmige Ausnehmung 5.32, 5.32' an, deren senkrecht zu Längsachse LA verlaufender innen liegender Mantelflächenabschnitt die erste und zweite Gegenanschlagfläche GAF, GAF* ausbilden.

Im Kupplungsfall bzw. in der Verriegelungsposition hintergreifen die erste und zweite Gegenanschlagfläche GAF, GAF* die erste bzw. zweite Anschlagsfläche AF, AF* und stützen sich in Richtung der Längsachse LA auf dieser ab. Mittels des Vorspannelementes 8 werden die dreieckförmigen Ausnehmungen 5.32, 5.32' des ersten und zweiten Verriegelungselementes 5.3, 5.3' gegen die kurzen Schenkel 6.22, 6.22' der stirnseitigen Nut 6.2 des Verbindungszapfens 6 gepresst.

Zum Lösen der Kupplungsanordnung 4 wird durch Drücken des Betätigungselementes 7 in Richtung des Kupplungselementes 5 ein Schwenken bzw. Drehen des ersten und zweiten Verriegelungselement 5.3, 5.3' um die erste bzw. zweite Dreh- oder Schwenkachse A, A' nach innen und somit jeweils entgegen der jeweiligen Vorspannkraft bewirkt. Die freien, jeweils der ersten und zweiten Dreh- oder Schwenkachse A, A' gegenüberliegenden Enden des ersten und zweiten Verriegelungselementes 5.3, 5.3' werden in Richtung der Längsachse LA zueinander bewegt, so dass der Abstand zwischen der ersten und zweiten Anschlagsfläche AF, AF* größer als der Abstand zwischen der ersten und zweiten Gegenanschlagsfläche GAF, GAF* ist. In dieser Position sind die freien Enden - ohne mit den kurzen Schenkeln 6.22, 6.22' zu kollidieren - problemlos aus der stirnseitigen Nut 6.1 entfernbar. Somit kann das abnehmbare Griff- oder Stielelement 3 bei entsprechender Betätigung des Betätigungselementes 7 vom Geschirrkörper 2 getrennt werden.

In einer bevorzugten Ausführungsform ist die Auslösemechanik 5.2 durch ein quaderförmiges Schieberelement gebildet, welches über zwei senkrecht zur Längsachse LA verlaufende Führungen 9, 9' verschiebbar im Führungskanal 5.1 gelagert ist, und zwar vorzugsweise oberhalb des Vorspannelementes 8. Die Führungen 9, 9' sind beispielsweise als U-Profile ausgebildet. Das quaderförmiges Schieberelement 5.2 weist an der Unterseite eine die Oberseite des ersten und zweiten Verriegelungselementes 5.3, 5.3' zumindest teilweise aufnehmende Steuerausnehmung 5.21 auf, welche sich in Richtung des ersten und zweiten Verriegelungselementes 5.3, 5.3' symmetrisch zur Längsachse LA nach unten öffnet und hierdurch zumindest zwei gegenläufige, schräge Steuerflächen ausbildet, an denen die ebenfalls jeweils abgeschrägten Oberseiten des ersten und zweiten Verriegelungselementes 5.3, 5.3' anliegen. Das erste und zweite Verriegelungselement 5.3, 5.3' werden aufgrund der durch das Vorspannelement 8 erzeugten Spannkräfte an die zumindest zwei gegenläufigen, schrägen Steuerflächen der Steuerausnehmung 5.21 gepresst. Das quaderförmige Schieberelement 5.2 ist beispielsweise fest mit dem Betätigungselement 7 verbunden oder einstückig mit diesem ausgebildet, so dass ein Drücken des Betätigungselementes 7 in Richtung des Kuppelelementes 7 ein Drehen- bzw. Schwenken des ersten und zweiten Verriegelungselementes 5.3, 5.3' um die erste bzw. zweite Dreh- oder Schwenkachse A, A* bewirkt.

Gemäß der zweiten Ausführungsform der erfindungsgemäßen Kupplungsanordnung 4 weist der Verbindungszapfen 6.1 des Gegenkopplungselementes 6 vorzugsweise eine erste und zweite seitliche Nut 6.3, 6.3' auf, die symmetrisch zur Längsachse LA angeordnet sind und die beispielsweise einen U-förmigen Querschnitt aufweisen. In den Figuren 5 und 6 ist beispielhaft die Kupplungsmechanik der Kupplungsanordnung 4 ohne ein umgebendes Kupplungsgehäuse schematisch dargestellt.

Das stirnseitige freie Ende des vorzugsweise quaderförmigen Verbindungszapfens 6.1 ist symmetrisch zur Längsachse LA beidseitig abgeschrägt, um ein einfaches Eintauchen des Verbindungszapfens 6.1 in den Führungskanal 5.1 und ein Auseinanderschieben des erste und zweite Verriegelungselementes 5.3, 5.3' entlang der Ebene E zu ermöglichen. Das erste und zweite Verriegelungselementes 5.3, 5.3' weisen in der vorliegenden Ausführungsform einen quaderförmigen Abschnitt 5.33, 5.33' auf, wobei die Quaderlängsachsen L, L' des ersten und zweiten Verriegelungselementes 5.3, 5.3' in der Ebene E und senkrecht zu Längsachse LA verlaufen. An den quaderförmigen Abschnitt 5.33, 5.33' des ersten und zweiten Verriegelungselementes 5.3, 5.3' schließen sich an dessen Stirnseiten jeweils ein konzentrisch zur Quaderlängsachse L, L' verlaufender stabförmiger Zapfenabschnitt 5.34, 5.34' an, die in einer oberen und unteren Führung 10, 10' entlang der Ebene E verschiebbar geführt sind.

Zumindest die oberen stabförmige Zapfenabschnitte 5.34, 5.34' sind wiederum über die Auslösemechanik 5.2 mit dem Betätigungselement 7 verbunden, wobei die Auslösemechanik 5.2 beispielhaft durch ein Bauteil mit einem trapezförmigen Querschnitt gebildet ist, dessen seitlichen gleichlangen Trapezschenkel zwei gegenüberliegende, symmetrisch zur Längsachse LA verlaufende Steuerflächen ausbilden. Die Steuerflächen wirken mit sich an die oberen stabförmigen Zapfenabschnitten 5.34, 5.34' anschließenden Steuerflächenabschnitte 5.35, 5.35' des ersten und zweiten Verriegelungselementes 5.3, 5.3' zusammen, und zwar derart, dass bei einem Drücken des Betätigungselementes 7 in Richtung des Kupplungselementes 5 das erste und zweite Verriegelungselement 5.3, 5.3' in der Ebene E nach außen verschoben werden, so dass der Abstand zwischen dem ersten und zweiten Verriegelungselement 5.3, 5.3' die Breite des vorzugsweise quaderförmigen Verbindungszapfens 6.1 überschreitet.

Das erste und zweite Verriegelungselement 5.3, 5.3' werden beispielsweise über ein erstes und zweites Vorspannelement 8, 8', vorzugsweise eine Feder, zueinander, d.h. in Richtung der Längsachse LA, vorgespannt, so dass nach Lösen des Betätigungselementes 7 das erste und zweite Verriegelungselement 5.3, 5.3' wieder zueinander verschoben werden.

Um ein einfaches Eindringen des vorzugsweise quaderförmigen Verbindungszapfens 6.1 zwischen die parallel zueinander angeordneten, ersten und zweiten Verriegelungselemente 5.3, 5.3' zu ermöglichen, sind die zueinander gerichteten vorderen Quaderkanten des quaderförmigen Abschnittes 5.33, 5.33' ebenfalls symmetrisch zur Längsachse LA abgeschrägt.

Die Erfindung wurde beispielhaft anhand eines als Pfanne ausgebildeten Kochgeschirr 1 mit einem abnehmbaren Griffelement 3 beschrieben, wobei das Griffelement 2 zumindest teilweise aus einem nicht wärmeleitenden Material, beispielsweise Kunststoff hergestellt ist. Die Erfindung ist jedoch keinesfalls auf diese beschriebenen Ausführungsformen beschränkt, vielmehr ist diese zur lösbaren Befestigung von diversen abnehmbaren Griff- und Stielelementen 3 an unterschiedlichsten Kochgeschirren 1 einsetzbar.

### Bezugszeichenliste

- 1: Kochgeschirr
- 2: Geschirrkörper
- 2': Anschlussbereich
- 3: Griff- oder Stielelement
- 4: Kupplungsanordnung
- 5: Kupplungselement
- 5.1: Führungskanal
- 5.2: Auslösemechanik
- 5.21: Steuerausnehmung
- 5.3, 5.3': Verriegelungselemente
- 5.31, 5.31': stirnseitiger Mantelflächenabschnitt
- 5.32, 5.32': Ausnehmungen
- 5.33, 5.33': quaderförmiger Abschnitt
- 5.34, 5.34': stabförmiger Zapfenabschnitt
- 5.35, 5.35': Steuerflächenabschnitt
- 6: Gegenkupplungselement
- 6.1: Verbindungszapfen
- 6.2: stirnseitige Nut
- 6.2': Nutöffnung
- 6.21, 6.21': Wandabschnitte
- 6.22, 6.22': kurze Schenkel
- 6.23, 6.23': Mantelflächenabschnitt
- 6.3, 6.3': seitliche Nut
- 7: Betätigungselement
- 8: Vorspannelement
- 9, 9': Führungen
- 10, 10': Führungen

- A, A*: Dreh- oder Schwenkachse
- E: Ebene
- L, L': Quaderlängsachsen
- LA: Längsachse
- AF, AF*: Anschlagfläche
- GAF, GAF*: Gegenanschlagfläche

## Patentansprüche

1. Kochgeschirr, insbesondere Pfanne oder Topf, bestehend aus einem Geschirrkörper (2) und wenigstens einem abnehmbaren Griff- oder Stielelement (3), bei dem das wenigstens eine abnehmbare Griff- oder Stielelement (3) am Geschirrkörper (2) mittels einer Kupplungsanordnung (4) befestigt ist, wobei die Kupplungsanordnung (4) zumindest ein Kupplungselement (5) und zumindest ein Gegenkupplungselement (6) aufweist, die entlang der Längsachse (LA) der Kupplungsanordnung (4) angeordnet sind, wobei die Längsachse (LA) näherungsweise senkrecht zum Anschlussbereich (2') der seitlichen Wandung des Geschirrkörpers (2) verläuft, bei dem die Kupplungsanordnung (4) zur Verriegelung des vom Kupplungselement (5) aufgenommenen Gegenkupplungselementes (6) ein erstes und zweites Verriegelungselement (5.3, 5.3') mit zumindest einer Gegenanschlagfläche (GAF, GAF*) aufweist, wobei das Gegenkupplungselement (6) zumindest eine stirnseitige Nut (6.2) oder zumindest eine seitliche Nut (6.3, 6.3') mit zumindest einer Anschlagfläche (AF, AF*) aufweist und zur Verriegelung des im Kupplungselement (5) aufgenommenen Gegenkupplungselementes (6) die Verriegelungselemente (5.3, 5.3') in die zumindest eine stirnseitige Nut (6.2) oder jeweils eine seitliche Nut (6.3, 6.3') wenigstens teilweise eingreifen, und zwar derart, dass sich die Gegenanschlagfläche (GAF, GAF*) im Verriegelungszustand auf der Anschlagfläche (AF, AF*) abstützt, wobei das erste und zweite Verriegelungselement (5.3, 5.3') um eine senkrecht zur Längsachse (LA) verlaufende Dreh- oder Schwenkachse (A, A*) dreh- bzw. schwenkbar und/oder in einer senkrecht zur Längsachse (LA) verlaufenden Ebene (E) verschiebbar gelagert sind, **dadurch gekennzeichnet, dass** zur Betätigung des ersten und zweiten Verriegelungselementes (5.3, 5.3') ein an der Oberseite des Kupplungselementes (5) angeordnetes Betätigungselement (7) vorgesehen ist und dass das erste und zweite Verriegelungselement (5.3, 5.3') über eine Auslösemechanik (5.2) mit dem Betätigungselement (7) verbunden sind, wobei die Auslösemechanik (5.2) durch eine Betätigung des Betätigungselementes (7) senkrecht zur Längsachse (LA) in Richtung des Kupplungselementes verschiebbar ist.

2. Kochgeschirr nach Anspruch 1, **dadurch gekennzeichnet, dass** das Kupplungselement (5) einen Führungskanal (5.1) zur zumindest teilweisen Aufnahme des Gegenkupplungselementes (6) aufweist.

3. Kochgeschirr nach Anspruch 1 oder 2, **dadurch gekennzeichnet, dass** das Gegenkupplungselement (6) einen Verbindungszapfen (6.1) umfasst, dessen Querschnittsform zur Herstellung einer vorzugsweise verdrehungssicheren Verbindung mit dem Kupplungselement (5) ausgebildet ist.

4. Kochgeschirr nach einem der Ansprüche 1 bis 3, **dadurch gekennzeichnet, dass** die Anschlagfläche (AF, AF*) parallel zur Ebene (E) und senkrecht zur Längsachse (LA) verläuft.

5. Kochgeschirr nach einem der Ansprüche 1 bis 4, **dadurch gekennzeichnet, dass** die stirnseitige Nut (6.2) durch zwei parallel zueinander verlaufende Wandabschnitte (6.21, 6.21'), die durch jeweils einen nach innen weisenden kurzen Schenkel (6.22, 6.22') abgeschlossen werden, gebildet wird, wobei die gegenüberliegenden kurzen Schenkel (6.22, 6.22') eine stirnseitige Nutöffnung (6.2') begrenzen.

6. Kochgeschirr nach einem der Ansprüche 2 bis 5, **dadurch gekennzeichnet, dass** im Führungskanal (5.1) des Kupplungselementes (5) das erste Verriegelungselement (5.3) um eine erste Dreh- oder Schwenkachse (A) und das zweite Verriegelungselement (5.3') um eine zweite Dreh- oder Schwenkachse (A*) dreh- bzw. schwenkbar gelagert ist.

7. Kochgeschirr nach Anspruch 6, **dadurch gekennzeichnet, dass** zwischen dem ersten und zweiten Verriegelungselement (5.3, 5.3') zumindest ein Vorspannelement (8), beispielsweise eine Feder, angeordnet ist, welches das erste und zweite Verriegelungselement (5.3, 5.3') mit einer von der Längsachse (LA) jeweils nach außen wirkenden Vorspannkraft beaufschlagt.

8. Kochgeschirr nach Anspruch 6 oder 7, **dadurch gekennzeichnet, dass** das erste und zweite Verriegelungselement (5.3, 5.3') über die Auslösemechanik (5.2) mit dem Betätigungselement (7) in einer Ruheposition gehalten werden, in welcher das erste und zweite Verriegelungselement (5.3, 5.3') annähernd parallel zueinander verlaufen.

9. Kochgeschirr nach einem der Ansprüche 5 bis 8, **dadurch gekennzeichnet, dass** die Auslösemechanik (5.2) durch ein quaderförmiges Schieberelement gebildet ist, welches über zwei senkrecht zur Längsachse (LA) verlaufende Führungen (9, 9') im Führungskanal (5.1) verschiebbar gelagert ist.

10. Kochgeschirr nach einem der Ansprüche 2 bis 4, **dadurch gekennzeichnet, dass** der Verbindungszapfen (6.1) des Gegenkupplungselementes (6) eine erste und zweite seitliche Nut (6.3, 6.3') aufweist, die symmetrisch zur Längsachse (LA) angeordnet sind.

11. Kochgeschirr nach Anspruch 10, **dadurch gekennzeichnet, dass** die erste und zweite seitliche Nut (6.3, 6.3') einen U-förmigen Querschnitt aufweisen.

12. Kochgeschirr nach Anspruch 10 oder 11, **dadurch gekennzeichnet, dass** das erste und zweite Verriegelungselement (5.3, 5.3') einen quaderförmigen Abschnitt (5.33, 5.33') aufweisen, dessen vom Verbindungszapfen (6.1) angewandten Seitenflächen die Gegenanschlagflächen (GAF, GAF*) ausbilden.

13. Kochgeschirr nach Anspruch 12, **dadurch gekennzeichnet, dass** sich an die Stirnseiten der quaderförmigen Abschnitte (5.33, 5.33') jeweils stabförmige Zapfenabschnitte (5.34, 5.34') anschließen, die in einer vorzugsweise gemeinsamen Führung (10, 10') verschiebbar geführt sind.

14. Kochgeschirr nach einem der vorhergehenden Ansprüche, **dadurch gekennzeichnet, dass** das Kupplungselement (5) oder das Gegenkupplungselement (6) im Griff- oder Stielelement (3) integriert ist.

15. Kochgeschirr nach einem der vorhergehenden Ansprüche, **dadurch gekennzeichnet, dass** das Kupplungselement (5) und/oder das Gegenkupplungselement (6) modulartig ausgebildet sind.

## Claims

1. Cookware, more particularly pan or pot, consisting of a pan body (2) and at least one removable grip or handle element (3) wherein the at least one removable grip or handle element (3) is fastened on the pan body (2) by means of a coupling assembly (4) wherein the coupling assembly (4) comprises at least one coupling element (5) and at least one counter coupling element (6) which are arranged along the longitudinal axis (LA) of the coupling assembly (4), wherein the longitudinal axis (LA) runs virtually perpendicular to the connecting area (2') of the side wall of the pan body (2) wherein for locking the counter coupling element (6) fitted on the coupling element (5) the coupling assembly (4) has a first and a second locking element (5.3, 5.3') with at least one counter stop face (GAF, GAF*), wherein the counter coupling element (6) has at least one end groove (6.2) or at least one lateral groove (6.3, 6.3') with at least one stop face (AF, AF*) and for locking the counter coupling element (6) fitted in the coupling element (5) the locking elements (5.3, 5.3') engage in the at least one end groove (6.2) or each in a lateral groove (6.3, 6.3') at least partially, namely so that the counter stop face (GAF, GAF*) is supported in the locking state on the stop face (AF, AF*), wherein the first and second locking element (5.3, 5.3') are mounted rotatable or pivotal about a rotational or pivotal axis (A, A*) respectively running perpendicular to the longitudinal axis (LA), and/or displaceable in a plane (E) running perpendicular to the longitudinal axis (LA), **characterised in that** for actuating the first and second locking element (5.3, 5.3') an actuating element (7) is provided which is mounted on the upper side of the coupling element (5), and that the first and second locking element (5.3, 5.3') are connected by a release mechanism (5.2) to the actuating element (7), wherein the release mechanism (5.2) is displaceable by actuating the actuating element (7) perpendicular to the longitudinal axis (LA) in the direction of the coupling element.

2. Cookware according to claim 1 **characterised in that** the coupling element (5) has a guide channel (5.1) for the at least partial holding of the counter coupling element (6).

3. Cookware according to claim 1 or 2 **characterised in that** the counter coupling element (6) comprises a connecting stud (6.1) whose cross-sectional shape is designed to produce a preferably non-rotational connection with the coupling element (5).

4. Cookware according to one of claims 1 to 3 **characterised in that** the stop face (AF, AF*) runs parallel to the plane (E) and perpendicular to the longitudinal axis (LA).

5. Cookware according to one of claims 1 to 4 **characterised in that** the end groove (6.2) is formed by two wall sections (6.21, 6.21') which run parallel to one another and which are each closed by an inwardly pointing short arm (6.22, 6.22'), wherein the opposing short arms (6.22, 6.22') define an end groove opening (6.2').

6. Cookware according to one of claims 2 to 5 **characterised in that** in the guide channel (5.1) of the coupling element (5) the first locking element (5.3) is mounted rotatable or pivotal about a first rotational or pivotal axis (A) and the second locking element (5.3') is mounted rotatable or pivotal about a second rotational or pivotal axis (A*) respectively.

7. Cookware according to claim 6 **characterised in that** between the first and second locking element (5.3, 5.3') there is at least one pretensioning element (8), by way of example a spring, which impinges on the first and second locking element (5.3, 5.3') with a pretensioning force acting outwards from the longitudinal axis (LA).

8. Cookware according to claim 6 or 7 **characterised in that** the first and second locking element (5.3, 5.3') are held via the release mechanism (5.2) with the actuating element (7) in a rest position in which the first and second locking element (5.3, 5.3') run virtually parallel to one another.

9. Cookware according to one of claims 5 to 8 **characterised in that** the release mechanism (5.2) is formed by a box-shaped slider element which is mounted displaceable in the guide channel (5.1) via two guides (9, 9') running perpendicular to the longitudinal axis (LA).

10. Cookware according to one of claims 2 to 4 **characterised in that** the connecting stud (6.1) of the counter coupling element (6) has a first and second lateral groove (6.3, 6.3') which are arranged symmetrical to the longitudinal axis (LA).

11. Cookware according to claim 10 **characterised in that** the first and second lateral groove (6.3, 6.3') have a U-shaped cross-section.

12. Cookware according to claim 10 or 11 **characterised in that** the first and second locking element (5.3, 5.3') have a box-shaped section (5.33, 5.33') whose side surfaces facing away from the connecting stud (6.1) form the counter stop faces (GAS, GAF*).

13. Cookware according to claim 12 **characterised in that** the end sides of the box-shaped sections (5.33, 5.33') are each adjoined by rod-like stud sections (5.34, 5.34') which are guided displaceable in a preferably common guide (10, 10').

14. Cookware according to one of the preceding claims **characterised in that** the coupling element (5) or the counter coupling element (6) is integrated in the grip or handle element (3).

15. Cookware according to one of the preceding claims **characterised in that** the coupling element (5) and/or the counter coupling element (6) are formed in modular fashion.

## Revendications

1. Vaisselle de cuisson, en particulier poêle ou casserole, composée d'un corps de vaisselle (2) et d'au moins un élément de poignée ou de manche amovible (3), dans laquelle ledit au moins un élément de poignée ou de manche amovible (3) est fixé au corps de vaisselle (2) au moyen d'un système de couplage (4), dans laquelle le système de couplage (4) comprend au moins un élément de couplage (5) et au moins un élément de couplage opposé (6), qui sont disposés le long de l'axe longitudinal (LA) du système de couplage (4), dans laquelle l'axe longitudinal (LA) s'étend à peu près perpendiculairement à la zone de raccordement (2') de la paroi latérale du corps de vaisselle (2), dans laquelle le système de couplage (4) comprend, pour le verrouillage de l'élément de couplage opposé (6) logé dans l'élément de couplage (5), un premier et un deuxième éléments de verrouillage (5.3, 5.3') avec au moins une face de contre-butée (GAF, GAF*), dans laquelle l'élément de couplage opposé (6) présente au moins une rainure frontale (6.2) ou au moins une rainure latérale (6.3, 6.3') avec au moins une face de butée (AF, AF*) et, pour le verrouillage de l'élément de couplage opposé (6) logé dans l'élément de couplage (5), les éléments de verrouillage (5.3, 5.3') s'engagent au moins partiellement dans ladite au moins une rainure frontale (6.2) ou respectivement dans une rainure latérale (6.3, 6.3'), notamment de telle manière que la face de contre-butée (GAF, GAF*) s'appuie à l'état verrouillé sur la face de butée (AF, AF*), dans laquelle le premier et le deuxième éléments de verrouillage (5.3, 5.3') sont montés de façon rotative ou pivotante autour d'un axe de rotation ou de pivotement (A, A*) s'étendant perpendiculairement à l'axe longitudinal (LA) et/ou d'une façon coulissante dans un plan (E) s'étendant perpendiculairement à l'axe longitudinal (LA), **caractérisée en ce qu'**il est prévu, pour l'actionnement du premier et du deuxième éléments de verrouillage (5.3, 5.3'), un élément d'actionnement (7) disposé sur le côté supérieur de l'élément de couplage (5) et **en ce que** le premier et le deuxième éléments de verrouillage (5.3, 5.3') sont reliés à l'élément d'actionnement (7) par un mécanisme de libération (5.2), dans laquelle le mécanisme de libération (5.2) peut coulisser dans la direction de l'élément de couplage, perpendiculairement à l'axe longitudinal (LA), en actionnant l'élément d'actionnement (7).

2. Vaisselle de cuisson selon la revendication 1, **caractérisée en ce que** l'élément de couplage (5) présente un canal de guidage (5.1) destiné à recevoir au moins en partie l'élément de couplage opposé (6).

3. Vaisselle de cuisson selon la revendication 1 ou 2, **caractérisée en ce que** l'élément de couplage opposé (6) comprend un tenon de liaison (6.1), dont la forme de la section transversale est conçue de façon à réaliser une liaison, de préférence bloquée en rotation, avec l'élément de couplage (5).

4. Vaisselle de cuisson selon l'une quelconque des revendications 1 à 3, **caractérisée en ce que** la face de butée (AF, AF*) s'étend parallèlement au plan (E) et perpendiculairement à l'axe longitudinal (LA).

5. Vaisselle de cuisson selon l'une quelconque des revendications 1 à 4, **caractérisée en ce que** la rainure frontale (6.2) est formée par deux parties de paroi (6.21, 6.21') s'étendant parallèlement l'une à l'autre, qui se terminent respectivement par une courte branche (6.22, 6.22') tournée vers l'intérieur, dans laquelle les courtes branches (6.22, 6.22') tournées l'une vers l'autre limitent une ouverture de rainure frontale (6.2').

6. Vaisselle de cuisson selon l'une quelconque des revendications 2 à 5, **caractérisée en ce que** le premier élément de verrouillage (5.3) et le deuxième élément de verrouillage (5.3') sont montés, dans le canal de guidage (5.1) de l'élément de couplage (5), de façon rotative ou pivotante respectivement autour d'un premier axe de rotation ou de pivotement (A) et autour d'un deuxième axe de rotation ou de pivotement (A*).

7. Vaisselle de cuisson selon la revendication 6, **caractérisée en ce qu'**au moins un élément de précontrainte (8), par exemple un ressort, est disposé entre le premier et le deuxième éléments de verrouillage (5.3, 5.3'), et agit sur le premier et le deuxième élément de verrouillage (5.3, 5.3') avec une force de précontrainte orientée respectivement vers l'extérieur à partir de l'axe longitudinal (LA).

8. Vaisselle de cuisson selon la revendication 6 ou 7, **caractérisée en ce que** le premier et le deuxième éléments de verrouillage (5.3, 5.3') sont maintenus dans une position de repos par le mécanisme de libération (5.2) avec l'élément d'actionnement (7), position dans laquelle le premier et le deuxième éléments de verrouillage (5.3, 5.3') s'étendent de façon approximativement parallèle l'un à l'autre.

9. Vaisselle de cuisson selon l'une quelconque des revendications 5 à 8, **caractérisée en ce que** le mécanisme de libération (5.2) est formé par un élément coulissant parallélépipédique, qui est monté de façon coulissante dans le canal de guidage (5.1) au moyen de deux guides (9, 9') s'étendant perpendiculairement à l'axe longitudinal (LA).

10. Vaisselle de cuisson selon l'une quelconque des revendications 2 à 4, **caractérisée en ce que** le tenon de liaison (6.1) de l'élément de couplage opposé (6) présente une première et une deuxième rainures latérales (6.3, 6.3'), qui sont disposées symétriquement à l'axe longitudinal (LA).

11. Vaisselle de cuisson selon la revendication 10, **caractérisée en ce que** la première et la deuxième rainures latérales (6.3, 6.3') présentent une section transversale en forme de U.

12. Vaisselle de cuisson selon la revendication 10 ou 11, **caractérisée en ce que** le premier et le deuxième éléments de verrouillage (5.3, 5.3') comportent une partie parallélépipédique (5.33, 5.33'), dont les faces latérales où s'applique le tenon de liaison (6.1) forment les faces de contre-butée (GAF, GAF*).

13. Vaisselle de cuisson selon la revendication 12, **caractérisée en ce que** des parties de tenon en forme de barre (5.34, 5.34'), qui sont guidées de façon coulissante dans un guide de préférence commun (10, 10'), se raccordent respectivement aux côtés frontaux des parties parallélépipédiques (5.33, 5.33').

14. Vaisselle de cuisson selon l'une quelconque des revendications précédentes, **caractérisée en ce que** l'élément de couplage (5) ou l'élément de couplage opposé (6) est intégré dans l'élément de poignée ou de manche (3).

15. Vaisselle de cuisson selon l'une quelconque des revendications précédentes, **caractérisée en ce que** l'élément de couplage (5) et/ou l'élément de couplage opposé (6) sont réalisés sous forme modulaire.
